# EUROPEAN PATENT APPLICATION

(11) **EP 4 391 296 A1**
(43) Date of publication of application: **26.06.2024**
(21) Application number: 22862879.8
(22) Date of filing: 05.07.2022
(51) Int. Cl.: H02J 9/06

(54) **POWER SUPPLY SYSTEM, POWER SUPPLY METHOD, AND POWER SUPPLY DEVICE**

(30) Priority: 02.09.2021 CN 202111026873
(71) Applicant: Huawei Digital Power Technologies Co., Ltd., Shenzhen, Guangdong 518043 (CN)
(72) Inventor: ZHENG, Mugui, Shenzhen, Guangdong 518043 (CN); YE, Wanxiang, Shenzhen, Guangdong 518043 (CN); WU, Wenxue, Shenzhen, Guangdong 518043 (CN)
(74) Representative: Isarpatent
(86) International application number: PCT/CN2022/103850
(87) International publication number: WO 2023/029738

(57) **Abstract**

This application discloses a power supply system, a power supply method, and a power supply apparatus, and relates to the field of power supply technologies. The power supply system includes a mains system, a renewable energy conversion unit, a fossil energy conversion unit, and a control unit. Because electric energy converted from renewable energy is cheaper than electric energy converted from fossil energy, the renewable energy conversion unit is added to the power supply system. When the mains system is abnormal, the control unit preferentially enables the renewable energy conversion unit to provide electric energy. If electric energy provided by the mains system and the renewable energy conversion unit still cannot meet a power supply requirement, the control unit starts the fossil energy conversion unit to provide electric energy. In this way, electricity consumption costs of a user are reduced as much as possible, and commercial competitiveness of the power supply system is improved.

## Description

This application claims priority to Chinese Patent Application No. 202111026873.6, filed with the China National Intellectual Property Administration on September 2, 2021 and entitled "POWER SUPPLY SYSTEM, POWER SUPPLY METHOD, AND POWER SUPPLY APPARATUS", which is incorporated herein by reference in its entirety.

### TECHNICAL FIELD

The present invention relates to the field of power supply technologies, and in particular, to a power supply system, a power supply method, and a power supply apparatus.

### BACKGROUND

In some remote regions such as remote mountainous areas and frontier and coast defense areas, it is difficult for a national power grid to provide comprehensive coverage. People living in these regions need to be provided with power supplies to support their normal lives and some basic industrial and commercial activities. To ensure power supply stability, generally, a genset is disposed in a mains system, to supply power when power supply by the mains system is abnormal. However, power generation by using the genset causes very high electricity consumption costs, which not only increases living costs of people, but also reduces commercial competitiveness of a power supply system.

### SUMMARY

To resolve the foregoing problem, embodiments of this application provide a power supply system, a power supply method, and a power supply apparatus. Because electric energy converted from renewable energy is cheaper than electric energy converted from fossil energy, a renewable energy conversion unit is added to the power supply system. When a mains system is abnormal, the renewable energy conversion unit is preferentially used for providing electric energy. If electric energy provided by the mains system and the renewable energy conversion unit still cannot meet a power supply requirement, a fossil energy conversion unit is started to provide electric energy. In this way, electricity consumption costs of a user are reduced as much as possible, thereby improving commercial competitiveness of the power supply system.

In view of this, the following technical solutions are used in embodiments of this application.

According to a first aspect, an embodiment of this application provides a power supply system, including: a mains system, configured to provide a first electrical signal for at least one load; a renewable energy conversion unit, configured to convert renewable energy into a second electrical signal, and provide the second electrical signal for the at least one load; a fossil energy conversion unit, configured to convert fossil energy into a third electrical signal, and provide the third electrical signal for the at least one load; and a control unit, configured to detect the mains system, the renewable energy conversion unit, and the fossil energy conversion unit, and when detecting that the mains system is abnormal, control the renewable energy conversion unit to work, or when detecting that both the mains system and the renewable energy conversion unit are abnormal, control the fossil energy conversion unit to work.

In this implementation, the renewable energy conversion unit for converting renewable energy into electric energy is added to the power supply system. When the mains system is abnormal, the renewable energy conversion unit is preferentially used for providing electric energy, thereby reducing electricity consumption costs of a user. If electric energy provided by the mains system and the renewable energy conversion unit still cannot meet a power supply requirement, the fossil energy conversion unit is started to provide electric energy. In this way, electricity consumption costs of the user can be reduced as much as possible, thereby improving commercial competitiveness of the power supply system.

In an implementation, the power supply system further includes an energy storage unit. An input end of the energy storage unit is connected to the mains system and/or the renewable energy conversion unit. An output end of the energy storage unit is connected to the at least one load. The energy storage unit is configured to receive, for charging, an electrical signal provided by the mains system and/or the renewable energy conversion unit, and provide a fourth electrical signal for the at least one load.

In this implementation, the energy storage unit is added to the power supply system. The energy storage unit may be charged while the mains system or the renewable energy unit normally supplies power. When power supply by the power supply system and the renewable energy conversion unit is abnormal, the energy storage unit may provide electric energy, and the fossil energy conversion unit may not be required to provide electric energy. This reduces electricity consumption costs.

In an implementation, the control unit is further configured to: when detecting that any one or more of the mains system, the renewable energy conversion unit, or the fossil energy conversion unit are abnormal, control the energy storage unit to provide the fourth electrical signal for the at least one load.

In an implementation, the power supply system further includes a maximum power point tracking unit, connected to the renewable energy conversion unit, and configured to detect maximum power of the second electrical signal generated by the renewable energy conversion unit, and output the second electrical signal of specified power.

In this implementation, for photovoltaic power generation, power thereof is correlated with intensity of sunlight. If the renewable energy conversion unit is of photovoltaic power generation, the maximum power point tracking unit needs to be connected to an output end of the unit, to detect a photovoltaic power generation voltage in real time and track maximum voltage and current values (V/I), so that photovoltaic power generation outputs electric energy at the maximum power or the specified power to meet the power supply requirement.

In an implementation, the power supply system further includes a direct current-direct current power conversion unit, connected to the energy storage unit, and configured to amplify or reduce power of the fourth electrical signal generated by the energy storage unit to the specified power.

In this implementation, for an electrical signal output by the energy storage unit, it is generally difficult to reach power required for power supply. Therefore, the direct current-direct current power conversion unit needs to be connected to the output end of the energy storage unit, to convert the electrical signal output by the energy storage unit into an electrical signal of the power required for power supply, so as to meet the power supply requirement.

In an implementation, the power supply system further includes an alternating current-direct current power conversion unit, connected to the fossil energy conversion unit, and configured to convert an alternating current electrical signal generated by the fossil energy conversion unit into a direct current electrical signal, and amplify or reduce power of the third electrical signal to the specified power.

In this implementation, an electrical signal output by the fossil energy conversion unit is generally of alternating current electricity. When the fossil energy conversion unit charges the energy storage unit, the charging needs to be performed in a direct current manner. Therefore, the direct current-direct current power conversion unit needs to be connected to an output end of the fossil energy unit, to convert alternating current electricity output by the fossil energy conversion unit into direct current electricity of the specified power, so as to charge the energy storage unit.

In an implementation, the power supply system further includes a direct current busbar, connected to the maximum power point tracking unit, the direct current-direct current power conversion unit, and the alternating current-direct current power conversion unit, and configured to connect the renewable energy conversion unit, the fossil energy conversion unit, and the energy storage unit in parallel, so that the renewable energy conversion unit and the fossil energy conversion unit provide electrical signals for the energy storage unit for charging.

In this implementation, the power supply units are connected in parallel on the direct current busbar, so that modular deployment can be implemented, and site capacity expansion is supported. Simple site capacity increase is implemented by connecting other power supply units in parallel on the direct current busbar.

In an implementation, the power supply system further includes a direct current-alternating current bidirectional conversion unit, connected to the direct current busbar, and configured to convert a direct current electrical signal into an alternating current electrical signal, and convert an alternating current electrical signal into a direct current electrical signal.

In this implementation, because electrical signals output by the power supply units connected on the direct current busbar are of direct current electricity whereas the existing load uses alternating current electricity, and the mains system provides alternating current electricity whereas an electrical signal for charging the energy storage unit is of direct current electricity, the direct current-alternating current bidirectional conversion unit needs to be connected between the direct current busbar, and the mains system and the load, so as to convert direct current electricity of each power supply unit on the direct current busbar into alternating current electricity to provide electric energy for each load, and convert alternating current electricity of the mains system into direct current electricity to charge the energy storage unit.

In an implementation, the power supply system further includes an alternating current busbar. One end of the alternating current busbar is connected to the mains system and the direct current-alternating current bidirectional conversion unit. The other end of the alternating current busbar is connected to the at least one load. The alternating current busbar is configured to connect the mains system and the direct current-alternating current bidirectional conversion unit in parallel, so that the mains system provides an electrical signal for the energy storage unit for charging.

In this implementation, the mains system and the direct current busbar are connected in parallel on the alternating current busbar, and then connected to each load, so that a direct parallel connection between the mains system and the other power supply units is avoided, and an adjustment switch is required for switching between the mains system and the other power supply units to provide electric energy for each load. This reduces a quantity of fault points on an alternating current side, thereby improving stability of a hardware system of the entire power supply system.

In an implementation, the power supply system further includes a bypass switch, where a first end is connected to the mains system, a second end is connected to the direct current-alternating current conversion unit, a third end is connected to the at least one load, and the bypass switch is configured to select the power supply system to provide the first electrical signal for the at least one load, and/or select the power supply system to provide an electrical signal for the energy storage unit for charging, and/or select any one or more of the renewable energy conversion unit to provide the fossil energy conversion unit, or the energy storage unit, an electrical signal for the at least one load.

In this implementation, the bypass switch is connected between the load, the mains system, and the direct current busbar, so that the user can actively perform adjustment based on an actual requirement of the user. The user may connect the mains system to each load, so that the mains system provides electric energy for each load; the user may connect the mains system to the DC-AC bidirectional conversion unit, so that the mains system provides electric energy for the energy storage unit to charge the energy storage unit; or the user may connect the DC-AC bidirectional conversion unit to each load, so that the renewable energy unit or the fossil energy conversion unit provides electric energy for each load.

In an implementation, the control unit is specifically configured to: when it is detected that power of the first electrical signal provided by the mains system is less than total power of the at least one load, control the renewable energy conversion unit to work.

In an implementation, the control unit is specifically configured to: when it is detected that total power of electrical signals provided by the mains system and the renewable energy conversion unit is less than the total power of the at least one load, control the energy storage unit to provide the fourth electrical signal for the at least one load.

In an implementation, the control unit is specifically configured to: when it is detected that total power of electrical signals provided by the mains system and the energy storage unit is less than the total power of the at least one load, control the fossil energy conversion unit to work.

In an implementation, the control unit is further configured to: when it is detected that total power of electrical signals provided by the mains system, the renewable energy conversion unit, and the energy storage unit is less than the total power of the at least one load, control the fossil energy conversion unit to work.

According to a second aspect, an embodiment of this application further provides a power supply method, including: detecting whether power of an electrical signal provided by a mains system is greater than total power of at least one load; when it is determined that the power of the electrical signal provided by the mains system is not greater than the total power of the at least one load, sending a first control instruction to a maximum power point tracking unit, where the first control instruction is used to enable the maximum power point tracking unit to detect maximum power of an electrical signal generated by a renewable energy conversion unit, and provide an electrical signal of specified power for the at least one load; detecting whether total power of the electrical signal provided by the mains system and the electrical signal provided by the maximum power point tracking unit is greater than the total power of the at least one load; and when it is determined that the total power of the electrical signal provided by the mains system and the electrical signal provided by the maximum power point tracking unit is not greater than the total power of the at least one load, sending a second control instruction to a fossil energy conversion unit, where the second control instruction is used to enable the fossil energy conversion unit to provide an electrical signal of the specified power for the at least one load.

In this implementation, in a process in which a power supply system provides electric energy for each load, if power of electric energy provided by the mains system cannot meet the total power of all the at least one load, the renewable energy unit may be invoked to provide electric energy, so that comparatively cheap electric energy converted from renewable energy such as wind energy or electric energy is used, thereby reducing electricity consumption costs of a user; and if electric energy provided by the mains system and the renewable energy unit still does not meet the total power for normal working of all the at least one load, the fossil energy conversion unit is invoked to provide electric energy. This reduces electricity consumption costs of the user as much as possible.

In an implementation, the when it is determined that the total power of the electrical signal provided by the mains system and the electrical signal provided by the maximum power point tracking unit is not greater than the total power of the at least one load, sending a second control instruction to a fossil energy conversion unit includes: when it is determined that the total power of the electrical signal provided by the mains system and the electrical signal provided by the maximum power point tracking unit is not greater than the total power of the at least one load, sending a third control instruction to an energy storage unit, where the third control instruction is used to enable the energy storage unit to provide an electrical signal of the specified power for the at least one load; detecting whether total power of the electrical signal provided by the mains system and the electrical signal provided by the energy storage unit is greater than the total power of the at least one load; and when it is determined that the total power of the electrical signal provided by the mains system and the electrical signal provided by the energy storage unit is not greater than the total power of the at least one load, sending the second control instruction to the fossil energy conversion unit.

In an implementation, the when it is determined that the total power of the electrical signal provided by the mains system and the electrical signal provided by the maximum power point tracking unit is not greater than the total power of the at least one load, sending a second control instruction to a fossil energy conversion unit includes: when it is determined that the total power of the electrical signal provided by the mains system and the electrical signal provided by the maximum power point tracking unit is not greater than the total power of the at least one load, sending a fourth control instruction to an energy storage unit, where the fourth control instruction is used to enable the energy storage unit to provide an electrical signal of the specified power for the at least one load; detecting whether total power of the electrical signal provided by the mains system and the electrical signal provided by the energy storage unit is greater than the total power of the at least one load; and when it is determined that total power of the electrical signal provided by the mains system, the electrical signal provided by the maximum power point tracking unit, and the electrical signal provided by the energy storage unit is not greater than the total power of the at least one load, sending the second control instruction to the fossil energy conversion unit.

According to a third aspect, an embodiment of this application further provides a power supply apparatus, including at least one processor. The processor is configured to execute instructions stored in a memory, so that the apparatus performs the embodiment according to the possible implementations of the second aspect.

According to a fourth aspect, an embodiment of this application further provides a computer-readable storage medium. The computer-readable storage medium stores a computer program. When the computer program is executed on a computer, the computer is enabled to perform the embodiment according to the possible implementations of the second aspect.

According to a fifth aspect, an embodiment of this application further provides a computer program product. The computer program product stores instructions. When the instructions are executed by a computer, the computer is enabled to implement the embodiment according to the possible implementations of the second aspect.

### BRIEF DESCRIPTION OF DRAWINGS

The following briefly describes accompanying drawings that need to be used in descriptions of embodiments or a conventional technology.
FIG. 1 is a schematic diagram of an architecture of a power supply system according to an embodiment of this application;
FIG. 2 is a schematic diagram of an architecture of another power supply system according to an embodiment of this application;
FIG. 3 is a schematic flowchart of implementation of a power supply method according to an embodiment of this application; and
FIG. 4 is a schematic diagram of a structure of a power supply apparatus according to an embodiment of this application.

### DESCRIPTION OF EMBODIMENTS

The following describes technical solutions in embodiments of this application with reference to accompanying drawings in embodiments of this application.

In descriptions of this application, orientation or location relationships indicated by terms such as "center", "above", "below", "front", "back", "left", "right", "vertical", "horizontal", "top", "bottom", "inner", and "outer" are orientation or location relationships based on the accompanying drawings, and are merely intended for ease of describing this application and simplifying description, rather than indicating or implying that an apparatus or element in question needs to have a specific orientation or needs to be constructed and operated in a specific orientation. Therefore, such terms shall not be construed as a limitation on this application.

In descriptions of this application, it should be noted that, unless otherwise expressly specified and limited, terms "mount", "interconnect", and "connect" should be understood in a broad sense. For example, such terms may indicate a fixed connection, may indicate a detachable connection, or may indicate a butt connection or an integral connection. A person of ordinary skill in the art may understand specific meanings of the foregoing terms in this application based on specific cases.

In descriptions of this specification, specific features, structures, materials, or characteristics may be combined in a suitable manner in any one or more embodiments or examples.

In embodiments of this application, to reduce electricity consumption costs of people in remote regions, and properly use local renewable energy such as solar energy, wind energy, and water energy, power generation systems such as photovoltaic and wind power generation systems are constructed, and these systems are networked with a mains system, so that when power supply by the mains system is insufficient or the mains system cannot provide coverage, comparatively cheap electricity provided by the photovoltaic and wind power generation systems can be preferentially supplied. In this way, electricity consumption costs of people in remote regions are reduced.

Renewable energy such as solar energy and wind energy is easily affected by an environment, and consequently, electricity provided by power generation systems such as photovoltaic and wind power generation systems is unstable. Therefore, a genset is further needed, so that the genset can provide electricity when a mains system is abnormal and a local environment has comparatively poor sunlight, no wind, or the like, thereby ensuring stability of an entire power supply system.

In the following descriptions of a power supply system in this application, a photovoltaic power generation system is used as an example to describe the technical solutions that claim protection in this application. In this application, the photovoltaic power generation system may be replaced with another renewable energy power generation system such as a wind power generation system or a hydraulic power generation system, or even may be networked into a mains system together with another renewable energy power generation system such as a wind power generation system or a hydraulic power generation system. This is not limited in this application.

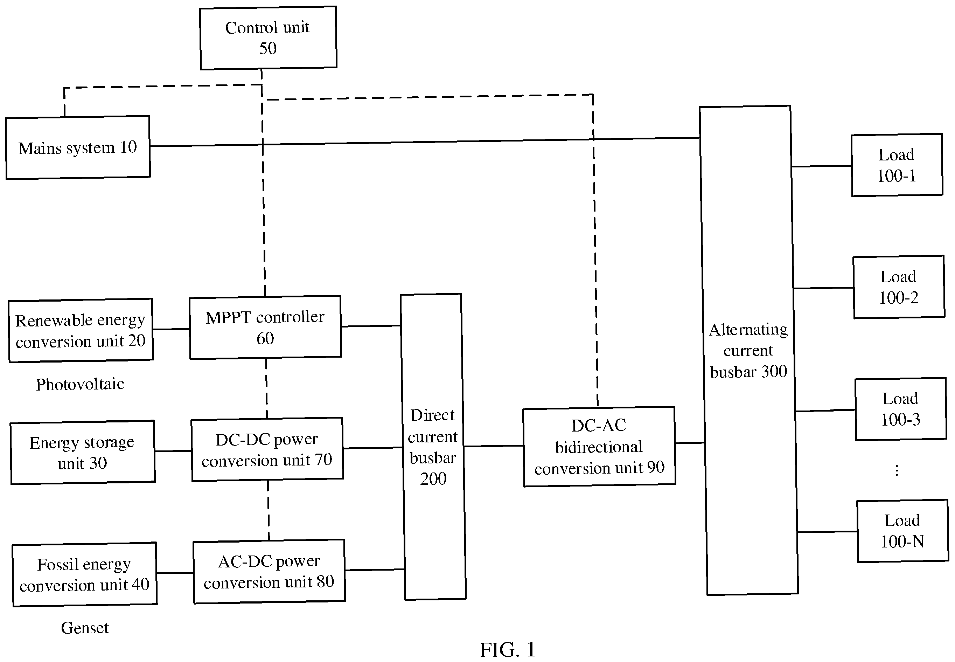

FIG. 1 is a schematic diagram of an architecture of a power supply system according to an embodiment of this application. As shown in FIG. 1, the power supply system includes a mains system 10, a renewable energy conversion unit 20, an energy storage unit 30, a fossil energy conversion unit 40, and a control unit 50. A structure of each unit and a connection manner between the units are specifically as follows.

The mains system 10 is usually a power supply network established by a nation or an enterprise, and mainly includes a power system and a power transmission and distribution system. The power system is mainly applied to power generation authorities such as a thermal power station, a hydropower station, and a nuclear power station. A function of the power system is to provide electric energy. The power transmission and distribution system is a power supply network that is distributed all over a country, that includes devices such as electric lines, transformers, utility poles, and electric meters, and that transmits electric energy. The power transmission and distribution system is configured to transmit, to each household, electric energy generated by the power system, and provide electric energy for each load 100.

When the mains system 10 is networked with other power supply units such as the renewable energy conversion unit 20, the energy storage unit 30, and the fossil energy conversion unit 40, the networking is usually performed on a power transmission and distribution system side. For example, if an application scenario is a school, the other power supply units are networked at a power control center of the school. In this case, the mains system 10 includes devices such as an electric line, a switch, and a transformer between a power station and the power control center of the school. If an application scenario is a home, the other power supply units are networked at an electric meter or a main switch of the home. In this case, the mains system 10 includes devices such as an electric line, a switch, and a transformer between a power station and the home. Other scenarios may be deduced by analogy. This is not limited in this application.

The renewable energy conversion unit 20 is a device that converts renewable energy such as solar energy, wind energy, or water energy into electric energy, for example, a photovoltaic device, a windmill, or a small hydropower station. In this application, the photovoltaic device is used as an example, and solar energy is converted into electric energy, so that cheap electric energy is obtained. Photovoltaic power generation is easily affected by an external environment, that is, higher sunlight intensity indicates higher power of photovoltaic power generation, and lower sunlight intensity indicates lower power of photovoltaic power generation. Therefore, power of electric energy generated through photovoltaic power generation changes at any time. If the electric energy is directly output, power supply by the entire power supply system is unstable.

In this application, an output end of the renewable energy conversion unit 20 is connected to a voltage regulation device, and voltage regulation processing is performed on electric energy that is output by the renewable energy conversion unit 20, so that the renewable energy conversion unit 20 outputs electric energy of specified power, thereby ensuring power supply stability of the power supply system. For example, for photovoltaic power generation, a maximum power point tracking (maximum power point tracking, MPPT) unit, namely, an MPPT controller 60, may be connected to a photovoltaic output end, to detect a photovoltaic power generation voltage in real time and track maximum voltage and current values (V/I), so that photovoltaic power generation outputs electric energy at maximum power or specified power.

The MPPT controller 60 is an electrical system adjusting a working state of an electrical module so that the photovoltaic device can output more electric energy, and can effectively store, in a battery, direct current electricity generated by the photovoltaic device, or provide electric energy for a user, thereby effectively resolving a problem of household and industrial electricity consumption in remote regions and tourist regions that cannot be covered by a conventional power grid, without causing environmental pollution.

The energy storage unit 30 is a device mainly configured to store electric energy and provide electric energy for another load 100, and may be a lead-acid battery, a lithium battery, or the like that is comparatively conventional in the market at present. In this application, the energy storage unit 30 may be charged by using a power supply unit such as the mains system 10, the renewable energy conversion unit 20, or the fossil energy conversion unit 40, and may provide electric energy for each load 100 when the power supply unit such as the mains system 10 and/or the renewable energy conversion unit 20 and/or the fossil energy conversion unit 40 is abnormal.

In this application, an output end of the energy storage unit 30 may be connected to a power conversion device. Due to a case such as a case in which power of electric energy that is output by the energy storage unit 30 may be comparatively small and cannot meet total power of all loads 100, a direct current-direct current (direct current-direct current, DC-DC) power converter 70 needs to be disposed at the output end of the energy storage unit 30, so that direct current electricity that is output by the energy storage unit 30 and that does not meet specified power is converted into direct current electricity of the specified power, to meet an electricity consumption requirement of each load 100.

The fossil energy conversion unit 40 is a device that converts fossil energy such as gasoline, diesel fuel, coal, or natural gas into electric energy, for example, a gasoline generator or a diesel generator. In this application, a household diesel generator is used as an example, and electric energy is generated by burning diesel fuel. However, such electric energy has comparatively high costs. Although electric energy that is output by the diesel generator is alternating current electricity, as the energy storage unit 30 needs to be charged, alternating current electricity that is output by the diesel generator needs to be converted into direct current electricity. In addition, due to a case such as a case in which power of alternating current electricity that is output by the diesel generator is comparatively small and does not meet the total power of all the loads 100, power of electric energy that is output by the diesel generator further needs to be adjusted.

In this application, an output end of the fossil energy conversion unit 40 is connected to an alternating current-direct current (alternating current-direct current, AC-DC) power converter 80, so that alternating current electricity that is output by the fossil energy conversion unit 40 and that does not meet the specified power is converted into direct current electricity of the specified power, so as to subsequently charge the energy storage unit 30.

Optionally, because electric energy generated by the fossil energy conversion unit 40 has comparatively high costs, the energy storage unit 40 may need to be charged, and when the mains system 10 or the renewable energy conversion unit 20 subsequently returns to normal, electric energy is provided for the energy storage unit 40 for charging. In this case, the output end of the fossil energy conversion unit 40 may be connected to a power converter, and electric energy that is output by the fossil energy conversion unit 40 only needs to be converted into electric energy of the specified power, so that the fossil energy conversion unit 40 can supply power to each load 100.

In this application, when other power supply units such as the renewable energy conversion unit 20, the energy storage unit 30, and the fossil energy conversion unit 40 are networked with the mains system 10, the other power supply units such as the renewable energy conversion unit 20, the energy storage unit 30, and the fossil energy conversion unit 40 may be first aggregated, and then networked with the mains system 10, so as to prevent the other power supply units such as the renewable energy conversion unit 20, the energy storage unit 30, and the fossil energy conversion unit 40 from being directly connected in parallel to the power supply system 10. In this case, a transfer switch such as an alternating current transfer switch (alternating-current transfer switch, ATS) is needed. This increases a quantity of fault points on an alternating current side, and therefore reduces stability of a hardware system of the entire power supply system.

For example, with reference to FIG. 1, the renewable energy conversion unit 20, the energy storage unit 30, and the fossil energy conversion unit 40 may be connected to a direct current busbar 200, and the renewable energy conversion unit 20, the energy storage unit 30, and the fossil energy conversion unit 40 are connected in parallel on the direct current busbar 200. The direct current busbar 200 is a connection device capable of an electrical connection, and can connect the power supply units in parallel, so that the renewable energy conversion unit 20, the energy storage unit 30, and the fossil energy conversion unit 40 can transfer electric energy to each load 100 through the direct current busbar 200, and electric energy on the renewable energy conversion unit 20 and the fossil energy conversion unit 40 can be transmitted to the energy storage unit 30 for charging, or electric energy of the mains system 10 can be transmitted to the energy storage unit 30 for charging.

In this embodiment, the power supply units are connected in parallel on the direct current busbar 200, so that modular deployment can be implemented, and site capacity expansion is supported. Simple site capacity increase is implemented by connecting other power supply units in parallel on the direct current busbar 200.

The power supply system provided in this application further includes a direct current-direct current (direct current-alternating current, DC-AC) bidirectional conversion unit 90. One end of the DC-AC bidirectional conversion unit 90 is connected to the renewable energy conversion unit 20, the energy storage unit 30, and the fossil energy conversion unit 40 by using the direct current busbar 200, and the other end of the DC-AC bidirectional conversion unit 90 is connected to each load 100 by using an alternating current busbar 300. Because electric energy that is output by the renewable energy conversion unit 20 through the MPPT controller 60, electric energy that is output by the energy storage unit 30 through the DC-DC power converter 70, and electric energy that is output by the fossil energy conversion unit 40 through the AC-DC power converter 80 are all direct current electricity, whereas most existing loads 100 use alternating current electricity, the DC-AC bidirectional conversion unit 90 needs to be disposed between each load and the renewable energy conversion unit 20, the energy storage unit 30, and the fossil energy conversion unit 40, to convert direct current electricity that is output through the MPPT controller 60, the DC-DC power converter 70, and the AC-DC power converter 80 into alternating current electricity, so as to provide alternating current electricity for each load 100.

In addition, when the energy storage unit 30 needs to be charged by using electric energy provided by the mains system 10, because electric energy provided by the mains system 10 is alternating current electricity whereas electric energy for charging the energy storage unit 30 is direct current electricity, the DC-AC bidirectional conversion unit 90 is required for converting alternating current electricity output by the mains system 10 into direct current electricity, so as to provide electricity for the energy storage unit 30 for charging.

In this application, the alternating current busbar 300 is further included. The mains system 10, the DC-AC bidirectional conversion unit 90, and each load 100 are all connected to the alternating current busbar 300, so as to prevent the mains system 10 from being directly connected to the power supply units such as the renewable energy conversion unit 20, the energy storage unit 30, and the fossil energy conversion unit 40. An adjustment switch is required for switching between the mains system 10 and the other power supply units to provide electric energy for each load 100. This reduces a quantity of fault points on the alternating current side, thereby improving stability of the hardware system of the entire power supply system.

The alternating current busbar 300 may be a main electric control unit that transfers external electric energy to each branch or each load in an application scenario, for example, a main connection busbar of lines of all rooms in a home, or a main connection busbar of lines of all industrial buildings in a factory. This is not limited in this application. Preferably, the alternating current busbar 300 is a connection device capable of an electrical connection, and may transmit electric energy of the mains system 10 to each load 100, may transmit, to each load 100, electric energy passing through the DC-AC bidirectional conversion unit 90, and may also transmit electric energy of the mains system 10 to the DC-AC bidirectional conversion unit 90.

In this embodiment of this application, the power supply units such as the renewable energy conversion unit 20, the energy storage unit 30, and the fossil energy conversion unit 40 are connected in parallel on the direct current busbar 200, so as to implement modular deployment of the system. Another power supply system may be connected to the direct current busbar 200, so as to implement site capacity expansion. Further, the mains system 10 and the direct current busbar 200 are connected in parallel on the alternating current busbar 300, and then connected to each load 100, so that a direct parallel connection between the mains system 10 and the other power supply units is avoided, and an adjustment switch is required for switching between the mains system 10 and the other power supply units to provide electric energy for each load 100. This reduces a quantity of fault points on the alternating current side, thereby improving stability of the hardware system of the entire power supply system.

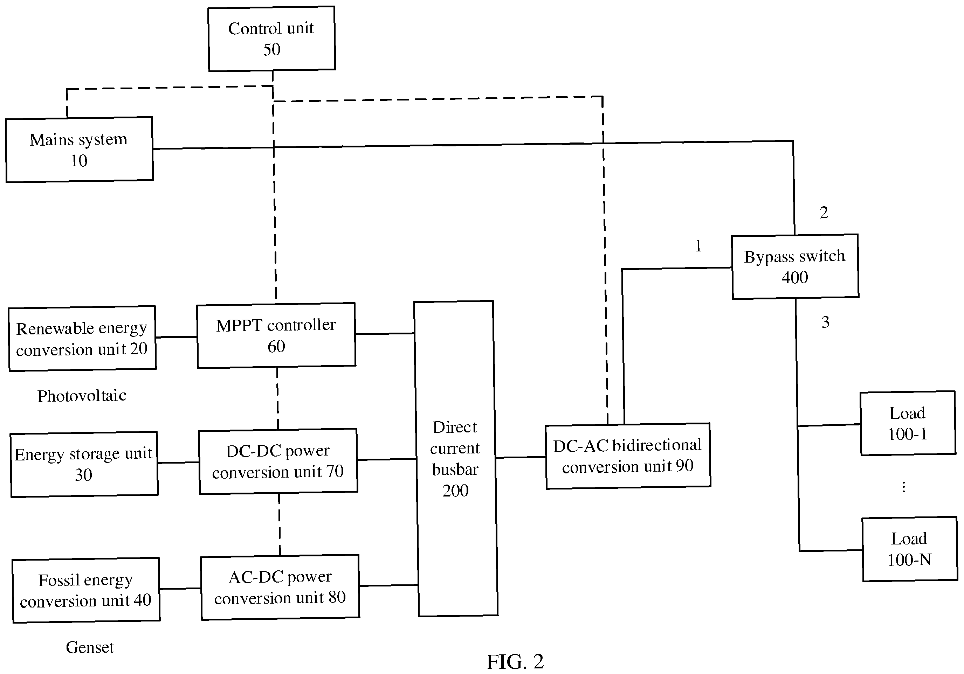

As shown in FIG. 2, the alternating current busbar 300 in FIG. 1 may be replaced with a bypass switch 400. A port 1 of the bypass switch 400 is connected to the DC-AC bidirectional conversion unit 90, a port 2 of the bypass switch 400 is connected to the mains system 10, and a port 3 of the bypass switch 400 is connected to each load 100. In this application, an active adjustment manner may be used, to connect the mains system 10 to each load 100, so that the mains system 10 provides electric energy for each load 100; or connect the mains system 10 to the DC-AC bidirectional conversion unit 90, so that the mains system 10 provides electric energy for the energy storage unit 30 to charge the energy storage unit 30; or connect the DC-AC bidirectional conversion unit 90 to each load 100, so that the renewable energy conversion unit 20 or the fossil energy conversion unit 40 provides electric energy for each load 100.

In this embodiment of this application, because electric energy generated by the renewable energy conversion unit 20 is cheaper than electric energy generated by the mains system 10, the active switch is disposed between the mains system 10, the other power supply units, and each load 100, so that a staff member can actively adjust the bypass switch 400 based on a current-day environment condition, for example, sufficient sunlight or strong wind conducive to electric energy generation of the renewable energy conversion unit 20, so that the renewable energy conversion unit 20 provides electric energy for each load 100, thereby further reducing electricity consumption costs of a user.

In this application, the power supply system further includes a control unit 50. The control unit 50 may be a power station control center on a side of the mains system 10, or may be an additionally configured processor. This is not limited in this application. The control unit 50 is configured to detect whether the mains system 10, the renewable energy conversion unit 20, the energy storage unit 30, and the fossil energy conversion unit 40 can supply power, and control a power supply sequence, power supply power, and power supply objects of the mains system 10, the renewable energy conversion unit 20, the energy storage unit 30, and the fossil energy conversion unit 40.

For example, the control unit 50 may be connected to a power system side of the mains system 10, and determine, by detecting a voltage, a current, or power of electric energy provided by the power system side, whether the mains system 10 works normally and power supply power provided by the mains system 10, so as to subsequently invoke another power supply unit to generate electric energy for compensation.

The control unit 50 may be directly connected to the MPPT controller 60, the DC-DC power conversion unit 70, and the AC-DC power conversion unit 80, or may establish a wireless communication connection to the MPPT controller 60, the DC-DC power conversion unit 70, and the AC-DC power conversion unit 80 by using a wireless communication unit (not shown in the figure). By receiving status information sent by the MPPT controller 60, the DC-DC power conversion unit 70, and the AC-DC power conversion unit 80 and sending control instructions to the MPPT controller 60, the DC-DC power conversion unit 70, and the AC-DC power conversion unit 80, the control unit 50 controls whether the MPPT controller 60, the DC-DC power conversion unit 70, and the AC-DC power conversion unit 80 work and power supply power of the MPPT controller 60, the DC-DC power conversion unit 70, and the AC-DC power conversion unit 80, so that the renewable energy conversion unit 20, the energy storage unit 30, and the fossil energy conversion unit 40 provide additional electric energy, or provide electric energy for the energy storage unit 30 for charging, or the like.

The control unit 50 may be directly connected to the DC-AC bidirectional conversion unit 90, or may establish a wireless communication connection to the DC-AC bidirectional conversion unit 90 by using a wireless communication unit (not shown in the figure), and controls, by sending a control instruction to the DC-AC bidirectional conversion unit 90, the DC-AC bidirectional conversion unit 90 to convert alternating current electricity into direct current electricity or convert direct current electricity into alternating current electricity, so as to determine whether the energy storage unit 30 provides electric energy for each load 100 or receives electric energy for charging.

In this application, the following describes, by using several embodiments, how the control unit 50 controls each power supply unit to work, so as to provide electric energy for each load 100.

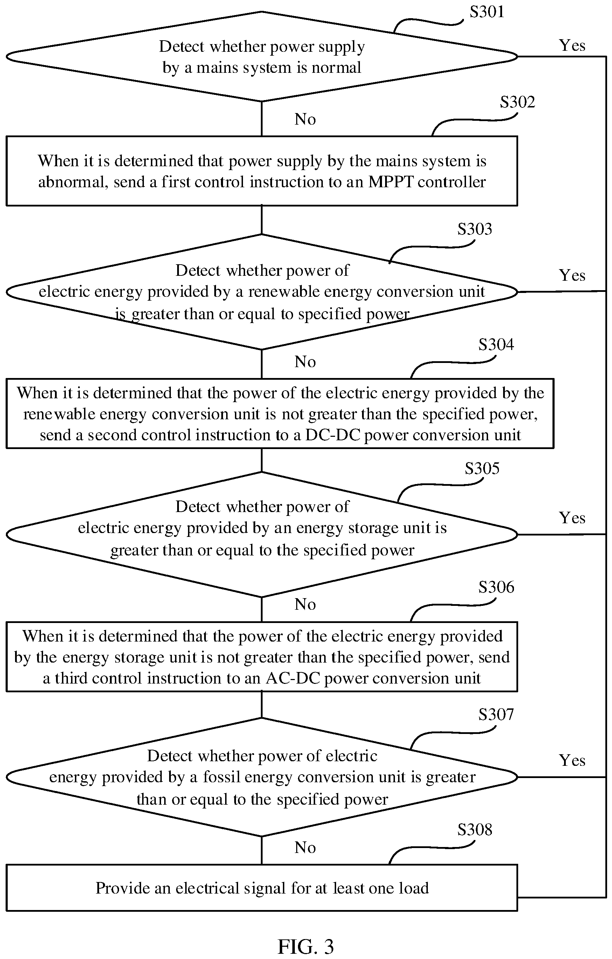

FIG. 3 is a schematic flowchart of a power supply manner in which a control unit controls a power supply system according to an embodiment of this application. As shown in FIG. 3, a specific process in which the control unit 50 controls the power supply system to supply power is as follows.

Step S301: Detect whether power supply by a mains system 10 is normal. Details are as follows:

The control unit 50 may detect, in real time or periodically, an electrical signal value such as a current, a voltage, or power of electric energy provided by the mains system 10, and determine, by detecting the electrical signal value of the electric energy, whether the mains system 10 provides electric energy and whether the power of the provided electric energy meets total power of all loads 100. For example, if the power P1 of the electric energy provided by the mains system 10 is 0, it indicates that the mains system 10 does not provide electric energy; if the power P1 of the electric energy provided by the mains system 10 is less than the total power P2 of all the loads 100, it indicates that the electric energy provided by the mains system 10 cannot meet working power of each load 100, and in this case, another power supply unit needs to provide additional electric energy; or if the power P1 of the electric energy provided by the mains system 10 is greater than or equal to the total power P2 of all the loads 100, it indicates that the electric energy provided by the mains system 10 meets working power of each load 100.

Step S302: When it is determined that power supply by the mains system 10 is abnormal, send a first control instruction to an MPPT controller 60. The first control instruction is used to instruct the MPPT controller 60 to generate electric energy of specified power. Details are as follows:

When the control unit 50 determines that power supply by the mains system 10 is abnormal, it indicates that the power P1 of the electric energy provided by the mains system 10 is zero or less than the total power P2 of all the loads 100. To enable the entire power supply system to normally provide electric energy for each load 100, a renewable energy conversion unit 20 may be invoked to provide electric energy of additional power, and electric energy converted from renewable energy such as solar energy or wind energy may be used, thereby reducing electricity consumption costs of a user.

For example, the control unit 50 calculates, based on the total power P2 of all the loads 100 and the power of the electric energy provided by the mains system 10, power P3 required for compensation, that is, P3=P2-P1, and then generates the control instruction and sends the control instruction to the MPPT controller 60. After receiving the first control instruction, the MPPT controller 60 detects, in real time or periodically, an electrical signal value such as a voltage, a current, or power of electric energy generated through photovoltaic power generation, tracks maximum voltage and current values, and outputs electric energy whose power is the compensation power P3. The output electric energy converges with the electric energy provided by the mains system 10, so that electric energy whose power is equal to the total power P2 of all the loads 100 is obtained, thereby normally supplying power to each load 100.

Step S303: Detect whether the power of the electric energy provided by the renewable energy conversion unit 20 is greater than or equal to the specified power. Details are as follows:

Because photovoltaic power generation is easily affected by light intensity in an external environment, if sunlight in the external environment is comparatively sufficient, so that photovoltaic power generation is comparatively powerful and generated electric energy can definitely reach the compensation power P3, the renewable energy conversion unit 20 provides electric energy of the compensation power P3, and then the electric energy of the compensation power P3 converges with the electric energy provided by the mains system 10, so that electric energy whose power is equal to the total power P2 of all the loads 100 is obtained, thereby normally supplying power to each load 100; or if sunlight in the external environment is insufficient, and consequently, photovoltaic power generation is comparatively weak and generated electric energy cannot reach the compensation power P3, electric energy provided by the mains system 10 and the renewable energy conversion unit 20 cannot meet the total power of all the loads 100, and therefore, the control unit 50 needs to invoke another power supply unit to provide electric energy.

For example, when detecting that power that is input to all the loads 100 is not greater than the compensation power P3, the MPPT controller 60 sends, to the control unit 50, power P4 of electric energy that is output to all the loads 100, so that the control unit 50 controls another power supply unit to provide electric energy of the compensation power, or determines, based on the power of the electric energy provided by the mains system 10 and the power of the electric energy provided by the renewable energy conversion unit 20, the power P3 by which another power supply unit needs to provide compensation.

Step S304: When it is determined that the power of the electric energy provided by the renewable energy conversion unit 20 is not greater than the specified power, send a second control instruction to DC-DC power conversion 70. The second control instruction is used to instruct the DC-DC power conversion 70 to convert electric energy output by an energy storage unit 30 into electric energy of the specified power. Details are as follows:

When the control unit 50 determines that the renewable energy conversion unit 20 cannot provide electric energy of the compensation power P3, it indicates that total power of the electric energy provided by the mains system 10 and the electric energy provided by the renewable energy conversion unit 20 is less than the total power P2 of all the loads 100. To enable the entire power supply system to normally provide electric energy for each load 100, the energy storage unit 30 may be invoked to provide electric energy of additional power, and the stored electric energy is used, thereby reducing electricity consumption costs of the user.

For example, when the control unit 50 determines that the electric energy provided by the renewable energy conversion unit 20 cannot meet the compensation power P3, it indicates that the power of the electric energy generated by the renewable energy conversion unit 20 is comparatively small, and the control unit 50 may choose to make the MPPT controller 60 stop working, so that the renewable energy conversion unit 20 does not need to provide electric energy for each load 100. This can prevent the renewable energy conversion unit 20 from generating dynamic electric energy that causes instability of power supply power of the entire power supply system. The control unit 50 generates the control instruction, and sends the control instruction to the DC-DC power conversion 70. After receiving the second control instruction, the DC-DC power conversion 70 outputs electric energy whose power is the compensation power P3, and the output electric energy converges with the electric energy provided by the mains system 10, so that electric energy whose power is equal to the total power P2 of all the loads 100 is obtained, thereby normally supplying power to each load 100.

Although the renewable energy conversion unit 20 cannot provide electric energy of the compensation power P3, the renewable energy conversion unit 20 may be enabled to provide electric energy for each load 100 at the maximum power P4 (P4<P3), thereby further reducing electricity consumption costs of the user. Optionally, the control unit 50 calculates, based on the total power P2 of all the loads 100, the power P1 of the electric energy provided by the mains system 10, and the power P4 of the electric energy provided by the renewable energy conversion unit 20, power P5 by which the energy storage unit 30 needs to compensate, that is, P5=P2-P1-P4, and then generates the control instruction and sends the control instruction to the DC-DC power conversion 70. After receiving the second control instruction, the DC-DC power conversion 70 outputs electric energy whose power is the compensation power P5, and the output electric energy converges with the electric energy provided by the mains system 10 and the renewable energy conversion unit 20, so that electric energy whose power is equal to the total power P2 of all the loads 100 is obtained, thereby normally supplying power to each load 100.

Step S305: Detect whether the power of the electric energy provided by the energy storage unit 30 is greater than or equal to the specified power. Details are as follows:
If the electric energy provided by the energy storage unit 30 can meet the compensation power P3, the energy storage unit 30 provides electric energy of the compensation power P3, and then the electric energy of the compensation power P3 converges with the electric energy provided by the mains system 10, so that electric energy whose power is equal to the total power P2 of all the loads 100 is obtained, thereby normally supplying power to each load 100; or if the total power P2 of all the loads 100 is comparatively large, and consequently, total power provided by the mains system 10 (and the renewable energy conversion unit 20) and the energy storage unit 30 still cannot reach the total power P2 for normal working of all the loads 100, the control unit 50 needs to invoke another power supply unit to provide electric energy.

For example, when detecting that power that is input to all the loads 100 is not greater than the compensation power P3, the DC-DC power conversion 70 sends, to the control unit 50, power P6 of electric energy that is output to all the loads 100, so that the control unit 50 controls another power supply unit to provide electric energy of the compensation power, or determines, based on the power of the electric energy provided by the mains system 10 (and the renewable energy conversion unit 20) and the energy storage unit 30, the power P3 by which another power supply unit needs to provide compensation.

Step S306: When it is determined that the power of the electric energy provided by the energy storage unit 30 is not greater than the specified power, send a third control instruction to AC-DC power conversion 80. The third control instruction is used to instruct the AC-DC power conversion 80 to convert electric energy output by a fossil energy conversion unit 40 into electric energy of the specified power. Details are as follows:
When the control unit 50 determines that the renewable energy conversion unit 20 and the energy storage unit 30 cannot provide electric energy of the compensation power P3, it indicates that the total power of the electric energy provided by the mains system 10 (and the renewable energy conversion unit 20) and the energy storage unit 30 is less than the total power P2 of all the loads 100. To enable the entire power supply system to normally provide electric energy for each load 100, the fossil energy conversion unit 40 may be invoked to provide electric energy of additional power.

For example, when the control unit 50 determines that the electric energy provided by both the renewable energy conversion unit 20 and the energy storage unit 30 cannot meet the compensation power P3, it indicates that the power of the electric energy generated by the renewable energy conversion unit 20 and the energy storage unit 30 is comparatively small, and the control unit 50 may choose to make the MPPT controller 60 and the DC-DC power conversion 70 stop working, so that the renewable energy conversion unit 20 and the energy storage unit 30 do not need to provide electric energy for each load 100. This can avoid a comparatively complex power supply process of the entire power supply system resulting from simultaneous power supply by an excessively large quantity of functional units. The control unit 50 generates the control instruction, and sends the control instruction to the AC-DC power conversion 80. After receiving the third control instruction, the AC-DC power conversion 80 outputs electric energy whose power is the compensation power P3, and the output electric energy converges with the electric energy provided by the mains system 10, so that electric energy whose power is equal to the total power P2 of all the loads 100 is obtained, thereby normally supplying power to each load 100.

Although the energy storage unit 30 cannot provide electric energy of the compensation power P3, the energy storage unit 30 may be enabled to provide electric energy for each load 100 at the maximum power P6 (P6<P3), thereby further reducing electricity consumption costs of the user. Optionally, the control unit 50 calculates, based on the total power P2 of all the loads 100, the power P1 of the electric energy provided by the mains system 10, and the power P6 of the electric energy provided by the energy storage unit 30, power P7 by which the energy storage unit 30 needs to compensate, that is, P7=P2-P1-P6, and then generates the control instruction and sends the control instruction to the AC-DC power conversion 80. After receiving the third control instruction, the AC-DC power conversion 80 outputs electric energy whose power is the compensation power P7, and the output electric energy converges with the electric energy provided by the mains system 10 and the energy storage unit 30, so that electric energy whose power is equal to the total power P2 of all the loads 100 is obtained, thereby normally supplying power to each load 100.

If the energy storage unit 30 cannot provide electric energy of the compensation power P3, the renewable energy conversion unit 20 and the energy storage unit 30 may be further enabled to provide electric energy for each load 100 at the maximum power (P4+P6<P3), thereby reducing electricity consumption costs of the user as much as possible. Optionally, the control unit 50 calculates, based on the total power P2 of all the loads 100, the power P1 of the electric energy provided by the mains system 10, the power P4 of the electric energy provided by the renewable energy conversion unit 20, and the power P6 of the electric energy provided by the energy storage unit 30, power P7 by which the energy storage unit 30 needs to compensate, that is, P7=P2-P1-P4-P6, and then generates the control instruction and sends the control instruction to the AC-DC power conversion 80. After receiving the third control instruction, the AC-DC power conversion 80 outputs electric energy whose power is the compensation power P7, and the output electric energy converges with the electric energy provided by the mains system 10, the renewable energy conversion unit 20, and the energy storage unit 30, so that electric energy whose power is equal to the total power P2 of all the loads 100 is obtained, thereby normally supplying power to each load 100.

Step S307: Detect whether the power of the electric energy provided by the fossil energy conversion unit 40 is greater than or equal to the specified power.

Step S308: Provide an electrical signal for at least one load. Details are as follows:
If the electric energy provided by the fossil energy conversion unit 40 can meet the compensation power P3, the fossil energy conversion unit 40 provides electric energy of the compensation power P3, and then the electric energy of the compensation power P3 converges with the electric energy provided by the mains system 10, so that electric energy whose power is equal to the total power P2 of all the loads 100 is obtained, thereby normally supplying power to each load 100; or if the total power P2 of all the loads 100 is comparatively large, and consequently, total power provided by the mains system 10 (and the renewable energy conversion unit 20 and the energy storage unit 30) and the fossil energy conversion unit 40 still cannot reach the total power P2 for normal working of all the loads 100, the entire power supply system cannot provide the total power for normal working of all the loads 100.

Optionally, after determining that the entire power supply system cannot provide the total power for normal working of all the loads 100, the control unit 50 may choose to enable all power supply units in the entire power supply system to supply power at maximum power, so as to ensure normal electricity consumption of the user as far as possible; or may choose to make the entire power supply system stop supplying power, or stop providing electric energy for some of the loads, so as to avoid overloaded working of the power supply system, thereby ensuring safety of the entire power supply system. Other solutions are not limited herein in this application.

In this embodiment of this application, in a process in which the power supply system provides electric energy for each load, if the power of the electric energy provided by the mains system 10 cannot meet the total power of all the loads, the renewable energy conversion unit 20 may be invoked to provide electric energy, so that comparatively cheap electric energy converted from renewable energy such as wind energy or electric energy is used, thereby reducing electricity consumption costs of the user; if the electric energy provided by the mains system 10 and the renewable energy conversion unit 20 still do not meet the total power for normal working of all the loads, the energy storage unit 30 is further invoked to provide electric energy; and if further invoking the energy storage unit 40 still cannot resolve a power supply problem, the fossil energy conversion unit 40 is finally invoked to provide electric energy. This reduces electricity consumption costs of the user as much as possible.

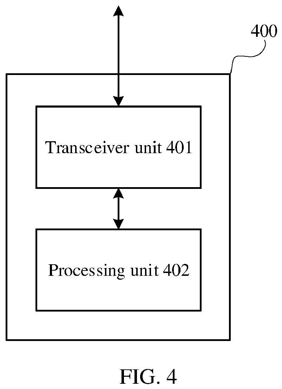

FIG. 4 is a schematic diagram of a structure of a power supply apparatus according to an embodiment of this application. As shown in FIG. 4, the apparatus 400 includes a transceiver unit 401 and a processing unit 402. Functions specifically performed by the units are as follows:
The processing unit 402 is configured to detect whether power of an electrical signal provided by a mains system is greater than total power of at least one load. The transceiver unit 401 is configured to: when it is determined that the power of the electrical signal provided by the mains system is not greater than the total power of the at least one load, send a first control instruction to a maximum power point tracking unit, where the first control instruction is used to enable the maximum power point tracking unit to detect maximum power of an electrical signal generated by a renewable energy conversion unit, and provide an electrical signal of specified power for the at least one load. The processing unit 402 is further configured to detect whether total power of the electrical signal provided by the mains system and the electrical signal provided by the maximum power point tracking unit is greater than the total power of the at least one load. The transceiver unit 401 is further configured to: when it is determined that the total power of the electrical signal provided by the mains system and the electrical signal provided by the maximum power point tracking unit is not greater than the total power of the at least one load, send a second control instruction to a fossil energy conversion unit, where the second control instruction is used to enable the fossil energy conversion unit to provide an electrical signal of the specified power for the at least one load.

In an implementation, the transceiver unit 401 is specifically configured to: when it is determined that the total power of the electrical signal provided by the mains system and the electrical signal provided by the maximum power point tracking unit is not greater than the total power of the at least one load, send a third control instruction to an energy storage unit, where the third control instruction is used to enable the energy storage unit to provide an electrical signal of the specified power for the at least one load. The processing unit 402 is specifically configured to detect whether total power of the electrical signal provided by the mains system and the electrical signal provided by the energy storage unit is greater than the total power of the at least one load. The transceiver unit 401 is specifically configured to: when it is determined that the total power of the electrical signal provided by the mains system and the electrical signal provided by the energy storage unit is not greater than the total power of the at least one load, send the second control instruction to the fossil energy conversion unit.

In an implementation, the transceiver unit 401 is specifically configured to: when it is determined that the total power of the electrical signal provided by the mains system and the electrical signal provided by the maximum power point tracking unit is not greater than the total power of the at least one load, send a fourth control instruction to an energy storage unit, where the fourth control instruction is used to enable the energy storage unit to provide an electrical signal of the specified power for the at least one load. The processing unit 402 is specifically configured to detect whether total power of the electrical signal provided by the mains system and the electrical signal provided by the energy storage unit is greater than the total power of the at least one load. The transceiver unit 401 is specifically configured to: when it is determined that total power of the electrical signal provided by the mains system, the electrical signal provided by the maximum power point tracking unit, and the electrical signal provided by the energy storage unit is not greater than the total power of the at least one load, send the second control instruction to the fossil energy conversion unit.

The present invention provides a computer-readable storage medium. The computer-readable storage medium stores a computer program. When the computer program is executed on a computer, the computer is enabled to perform any method described in FIG. 3 and corresponding descriptions above.

The present invention provides a computer program product. The computer program product stores instructions. When the instructions are executed by a computer, the computer is enabled to implement any method described in FIG. 3 and corresponding descriptions above.

A person of ordinary skill in the art may be aware that units and algorithm steps described as examples with reference to the embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of embodiments of this application.

In addition, each aspect or feature in embodiments of this application may be implemented as a method, an apparatus, or an artifact that uses standard programming and/or engineering technologies. The term "artifact" used in this application covers a computer program that can be accessed from any computer-readable device, carrier, or medium. For example, the computer-readable medium may include but is not limited to: a magnetic storage device (for example, a hard disk, a floppy disk, or a magnetic tape), an optical disc (for example, a compact disc (compact disc, CD) or a digital versatile disc (digital versatile disc, DVD)), a smart card, and a flash memory device (for example, an erasable programmable read-only memory (erasable programmable read-only memory, EPROM), a card, a stick, or a key drive). In addition, various storage media described in this specification may represent one or more devices and/or other machine-readable media configured to store information. The term "machine-readable media" may include but is not limited to a radio channel and various other media that can store, include, and/or carry instructions and/or data.

In the foregoing embodiment, the power supply apparatus 400 in FIG. 4 may be implemented completely or partially by using software, hardware, firmware, or any combination thereof. When software is used for implementation, the apparatus may be implemented completely or partially in a form of a computer program product. The computer program product includes one or more computer instructions. When the computer program instructions are loaded and executed on a computer, the procedures or functions according to embodiments of this application are all or partially generated. The computer may be a general-purpose computer, a special-purpose computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible to a computer, or may be a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solidstate disk (solid state disk, SSD)), or the like.

It should be understood that, in various embodiments of embodiments of this application, sequence numbers of the foregoing processes do not indicate execution sequences. Execution sequences of the processes should be determined based on functions and internal logic of the processes, and shall not constitute any limitation on an implementation process of embodiments of this application.

It can be clearly understood by a person skilled in the art that, for ease and brevity of description, for specific working processes of the foregoing system, apparatus, and unit, reference may be made to corresponding processes in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division, and there may be another division manner during actual implementation. For example, a plurality of units or components may be combined or may be integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate components may be or may not be physically separate, and components displayed as units may be or may not be physical units, and may be located in one position, or may be distributed on a plurality of network units. Some or all of the units may be selected based on an actual requirement to achieve the objectives of the technical solutions in the embodiments.

When the function is implemented in a form of a software function unit and is sold or used as an independent product, the function may be stored in a computer-readable storage medium. Based on such an understanding, the technical solutions in embodiments of this application essentially, or the part contributing to a conventional technology, or a part of the technical solutions may be implemented in a form of a software product. The computer software product is stored in a storage medium, and includes several instructions for instructing a computer device (which may be a personal computer, a server, an access network device, or the like) to perform all or some of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of embodiments of this application, but are not intended to limit the protection scope of embodiments of this application. Any variation or replacement readily figured out by a person skilled in the art within the technical scope disclosed in embodiments of this application shall fall within the protection scope of embodiments of this application.

## Claims

1. A power supply system, comprising:
a mains system, configured to provide a first electrical signal for at least one load;
a renewable energy conversion unit, configured to convert renewable energy into a second electrical signal, and provide the second electrical signal for the at least one load;
a fossil energy conversion unit, configured to convert fossil energy into a third electrical signal, and provide the third electrical signal for the at least one load; and
a control unit, configured to detect the mains system, the renewable energy conversion unit, and the fossil energy conversion unit; and when detecting that the mains system is abnormal, control the renewable energy conversion unit to work, or when detecting that both the mains system and the renewable energy conversion unit are abnormal, control the fossil energy conversion unit to work.

2. The power supply system according to claim 1, further comprising:
an energy storage unit, wherein an input end of the energy storage unit is connected to the mains system and/or the renewable energy conversion unit, an output end of the energy storage unit is connected to the at least one load, and the energy storage unit is configured to receive, for charging, an electrical signal provided by the mains system and/or the renewable energy conversion unit, and provide a fourth electrical signal for the at least one load.

3. The power supply system according to claim 2, wherein the control unit is further configured to: when detecting that any one or more of the mains system, the renewable energy conversion unit, orthe fossil energy conversion unit are abnormal, control the energy storage unit to provide the fourth electrical signal for the at least one load.

4. The power supply system according to any one of claims 1 to 3, further comprising:
a maximum power point tracking unit, connected to the renewable energy conversion unit, and configured to detect maximum power of the second electrical signal generated by the renewable energy conversion unit, and output the second electrical signal of specified power.

5. The power supply system according to any one of claims 1 to 4, further comprising:
a direct current-direct current power conversion unit, connected to the energy storage unit, and configured to amplify or reduce power of the fourth electrical signal generated by the energy storage unit to the specified power.

6. The power supply system according to any one of claims 1 to 5, further comprising:
an alternating current-direct current power conversion unit, connected to the fossil energy conversion unit, and configured to convert an alternating current electrical signal generated by the fossil energy conversion unit into a direct current electrical signal, and amplify or reduce power of the third electrical signal to the specified power.

7. The power supply system according to any one of claims 4 to 6, further comprising:
a direct current busbar, connected to the maximum power point tracking unit, the direct current-direct current power conversion unit, and the alternating current-direct current power conversion unit, and configured to connect the renewable energy conversion unit, the fossil energy conversion unit, and the energy storage unit in parallel, so that the renewable energy conversion unit and the fossil energy conversion unit provide electrical signals for the energy storage unit for charging.

8. The power supply system according to claim 7, further comprising:
a direct current-alternating current bidirectional conversion unit, connected to the direct current busbar, and configured to convert a direct current electrical signal into an alternating current electrical signal, and convert an alternating current electrical signal into a direct current electrical signal.

9. The power supply system according to claim 8, further comprising:
an alternating current busbar, wherein one end of the alternating current busbar is connected to the mains system and the direct current-alternating current bidirectional conversion unit, the other end of the alternating current busbar is connected to the at least one load, and the alternating current busbar is configured to connect the mains system and the direct current-alternating current bidirectional conversion unit in parallel, so that the mains system provides an electrical signal for the energy storage unit for charging.

10. The power supply system according to claim 8, further comprising:
a bypass switch, wherein a first end is connected to the mains system, a second end is connected to the direct current-alternating current conversion unit, a third end is connected to the at least one load, and the bypass switch is configured to select the power supply system to provide the first electrical signal for the at least one load, and/or select the power supply system to provide an electrical signal for the energy storage unit for charging, and/or select any one or more of the renewable energy conversion unit, the fossil energy conversion unit, or the energy storage unit to provide an electrical signal for the at least one load.

11. The power supply system according to any one of claims 1 to 10, wherein the control unit is specifically configured to:
when it is detected that power of the first electrical signal provided by the mains system is less than total power of the at least one load, control the renewable energy conversion unit to work.

12. The power supply system according to any one of claims 1 to 11, wherein the control unit is specifically configured to:
when it is detected that total power of electrical signals provided by the mains system and the renewable energy conversion unit is less than the total power of the at least one load, control the energy storage unit to provide the fourth electrical signal for the at least one load.

13. The power supply system according to any one of claims 1 to 12, wherein the control unit is specifically configured to:
when it is detected that total power of electrical signals provided by the mains system and the energy storage unit is less than the total power of the at least one load, control the fossil energy conversion unit to work.

14. The power supply system according to any one of claims 1 to 12, wherein the control unit is further configured to:
when it is detected that total power of electrical signals provided by the mains system, the renewable energy conversion unit, and the energy storage unit is less than the total power of the at least one load, control the fossil energy conversion unit to work.

15. A power supply method, comprising:
detecting whether power of an electrical signal provided by a mains system is greater than total power of at least one load;
when it is determined that the power of the electrical signal provided by the mains system is not greater than the total power of the at least one load, sending a first control instruction to a maximum power point tracking unit, wherein the first control instruction is used to enable the maximum power point tracking unit to detect maximum power of an electrical signal generated by a renewable energy conversion unit, and provide an electrical signal of specified power for the at least one load;
detecting whether total power of the electrical signal provided by the mains system and the electrical signal provided by the maximum power point tracking unit is greater than the total power of the at least one load; and
when it is determined that the total power of the electrical signal provided by the mains system and the electrical signal provided by the maximum power point tracking unit is not greater than the total power of the at least one load, sending a second control instruction to a fossil energy conversion unit, wherein the second control instruction is used to enable the fossil energy conversion unit to provide an electrical signal of the specified power for the at least one load.

16. The power supply method according to claim 15, wherein the when it is determined that the total power of the electrical signal provided by the mains system and the electrical signal provided by the maximum power point tracking unit is not greater than the total power of the at least one load, sending a second control instruction to a fossil energy conversion unit comprises:
when it is determined that the total power of the electrical signal provided by the mains system and the electrical signal provided by the maximum power point tracking unit is not greater than the total power of the at least one load, sending a third control instruction to an energy storage unit, wherein the third control instruction is used to enable the energy storage unit to provide an electrical signal of the specified power for the at least one load;
detecting whether total power of the electrical signal provided by the mains system and the electrical signal provided by the energy storage unit is greater than the total power of the at least one load; and
when it is determined that the total power of the electrical signal provided by the mains system and the electrical signal provided by the energy storage unit is not greater than the total power of the at least one load, sending the second control instruction to the fossil energy conversion unit.

17. The power supply method according to claim 15, wherein the when it is determined that the total power of the electrical signal provided by the mains system and the electrical signal provided by the maximum power point tracking unit is not greater than the total power of the at least one load, sending a second control instruction to a fossil energy conversion unit comprises:
when it is determined that the total power of the electrical signal provided by the mains system and the electrical signal provided by the maximum power point tracking unit is not greater than the total power of the at least one load, sending a fourth control instruction to an energy storage unit, wherein the fourth control instruction is used to enable the energy storage unit to provide an electrical signal of the specified power for the at least one load;
detecting whether total power of the electrical signal provided by the mains system and the electrical signal provided by the energy storage unit is greater than the total power of the at least one load; and
when it is determined that total power of the electrical signal provided by the mains system, the electrical signal provided by the maximum power point tracking unit, and the electrical signal provided by the energy storage unit is not greater than the total power of the at least one load, sending the second control instruction to the fossil energy conversion unit.

18. A power supply apparatus, comprising at least one processor, wherein the processor is configured to execute instructions stored in a memory, so that the apparatus performs the method according to any one of claims 15 to 17.

19. A computer-readable storage medium, wherein the computer-readable storage medium stores a computer program, and when the computer program is executed on a computer, the computer is enabled to perform the method according to any one of claims 15 to 17.

20. A computer program product, wherein the computer program product stores instructions, and when the instructions are executed by a computer, the computer is enabled to implement the method according to any one of claims 15 to 17.
